(19) **Europäisches Patentamt**
**European Patent Office**
**Office européen des brevets**

(11) **EP 4 632 619 A1**

(12) **EUROPEAN PATENT APPLICATION**

(43) Date of publication:
**15.10.2025 Bulletin 2025/42**

(21) Application number: **25160441.9**

(22) Date of filing: **27.02.2025**

(51) International Patent Classification (IPC):
*G06F 30/27* (2020.01)    *G06N 3/08* (2023.01)
*G06N 20/00* (2019.01)    *G06Q 10/04* (2023.01)

(52) Cooperative Patent Classification (CPC):
**G06F 30/27; G06N 3/045; G06N 3/08; G06N 3/084;**
**G06N 3/088; G06N 5/01; G06N 7/01; G06N 20/00;**
**G06N 20/10; G06N 20/20; G06Q 10/04;**
G06F 2113/08

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.04.2024 US 202418632683**

(71) Applicant: **Schneider Electric USA, Inc.**
**Andover, MA 01810 (US)**

(72) Inventors:
• **Tiwari, Pranshu**
  **Andover, MA, 01810 (US)**
• **Nahane, Harshal**
  **Andover, MA, 01810 (US)**

(74) Representative: **Manitz Finsterwald**
**Patent- und Rechtsanwaltspartnerschaft mbB**
**Martin-Greif-Straße 1**
**80336 München (DE)**

(54) **MACHINE LEARNING OPTIMIZATION OF A PROCESS IN VIEW OF PREDICTED SUSTAINABILITY**

(57)    A method of performing sustainability optimization includes processing a set of inputs using a trained machine learning model to generate a set of outputs, wherein the set of inputs correspond to configuration parameters of a process configured to be performed on a physical machine, and wherein the set of outputs includes a plurality of predicted waste metrics resulting from performance of the process on the physical machine. The method further includes optimizing the set of inputs and the set of outputs for meeting sustainability constraints in view of prospcess constraints and outputting a recommendation for operating the process on the physical machine based on the optimized set of inputs and set of outputs, for avoiding a risk of failure to operate the process, while meeting the sustainability constraints and the process constraints.

**EP 4 632 619 A1**

**Description**

TECHNICAL FIELD

The present disclosure relates to process optimization, and more particularly, to machine learning optimization of a process in view of predicted sustainability.

BACKGROUND

Life cycle assessment (LCA) is a data intensive approach for quantifying environmental sustainability of a process, which allows researchers to compare different processes and innovate. Tools currently available can study existing processes and generate reports per guidelines provided by regulatory commissions and boards. The result is a reactive approach for parameters to use for sustainability based on existing process parameters. Newer tools have been developed that simulate a waste vector for one or more simulated processes. These tools are not capable of optimizing parameters for applied inputs for a single simulated process.

Conventional methods and systems for LCA and simulations have generally been considered satisfactory for their intended purpose. However, there is still a need in the art for optimization of a future state of a process.

SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a computer-implemented method of performing sustainability optimization, which includes processing a set of inputs using a trained machine learning model to generate a set of outputs, wherein the set of inputs correspond to configuration parameters of a process configured to be performed on a physical machine, and wherein the set of outputs includes a plurality of predicted waste metrics resulting from performance of the process on the physical machine. The method further includes optimizing the set of inputs and the set of outputs for meeting sustainability constraints in view of process constraints and outputting a recommendation for operating the process on the physical machine based on the optimized set of inputs and set of outputs, for avoiding a risk of failure to operate the process, while meeting the sustainability constraints and the process constraints.

In one or more embodiments, the set of inputs can be used by a twin or a simulation model of the process as performed on the physical machine to twin or simulate the configuration parameters of the process, and the set of outputs result from application of the twin or the simulation model of the process using the set of inputs.

In one or more embodiments, the set of outputs can include at least one desired process output and at least one unwanted output, wherein the unwanted output can include a plurality of waste metrics resulting from performance of the twin or simulation of the process using the set of inputs, and the sustainability constraints can be based on the plurality of waste metrics. Optimizing the set of inputs and the set of outputs can include optimizing both the at least one desired process output and the at least one unwanted output.

In one or more embodiments, the method can further include applying machine learning (ML) regression techniques to one or more input data structures associated with the set of inputs and one or more output data structures associated with the set of outputs to train the ML model, wherein the optimizing the set of inputs and the set of outputs can use a product of the ML regression techniques.

In one or more embodiments, the method can further include determining whether a number of waste metrics included in the one or more output data structures exceeds a first threshold value, and in response to determining that the number of waste metrics exceeds the first threshold value, constructing a reconstructed output data structure by reconstructing the one or more output data structures for the reconstructed output data structure to have a lower dimension than the one or more output data structures. The ML regression techniques can use the reconstructed output data structure instead of the one or more output data structures.

In one or more embodiments, the method can further include determining whether a number of input metrics included in the one or more input data structures exceeds a second threshold values, and in response to determining that the number of input metrics exceeds the second threshold value, constructing a reconstructed input data structure by reconstructing the one or more input data structures for the reconstructed input data structure to have a lower dimension than the one or more input data structures. The ML regression techniques can use the reconstructed input data structure instead of the one or more input data structures.

In one or more embodiments, reconstructing the waste vector can use at least one method selected from the following methods: single vector decomposition after normalization.

In one or more embodiments, the method can further include performing an outer cross validation to test consistency of a plurality of trained ML model across different test sets and select the trained ML model from a plurality of trained ML models based on the consistency, and performing an inner validation to test consistency of hyper-parameter and/or feature selection for trained ML model and selecting hyper-parameters and/or features for the trained ML model based on the consistency.

In one or more embodiments, optimizing the set of inputs and the set of outputs can include using a Jacobian matrix for different waste functions associated with waste outputs of the set of outputs, identifying optimum weights for the Jacobian matrix, and predicting waste output by the process using the optimum weights identified for the Jacobian matrix.

In one or more embodiments, optimizing the set of inputs and the set of outputs can include using an ML-based stochastic gradient descent for identifying weights for each waste metric included in a waste vector associated with the set of outputs and applying a multi-objective waste function for determining the optimized set of inputs and the optimized set of outputs.

In one or more embodiments, the optimization can further include minimizing a multi-objective waste function using a Deterministic Optimization process.

In one or more embodiments, the optimization can further minimize costs associated with operation of the process.

In accordance with another aspect of the disclosure, a system for customizing orchestration of the industrial system is provided. A computer system for sustainability optimization is provided. The system includes at least one memory configured to store programmable instructions and at least one processing device in communication with the at least one memory. The at least one processing device includes and/or accesses at least one neural network. The at least one processing device, upon execution of the programmable instructions is configured to perform the disclosed method.

In accordance with still a further aspect of the disclosure, a non-transitory computer readable storage medium and one or more computer programs embedded therein is provided, which when executed by a computer system, cause the computer system to perform the disclosed method.

These and other features of the systems and methods of the subject disclosure will become more readily apparent to those skilled in the art from the following detailed description of the preferred embodiments taken in conjunction with the drawings.

BRIEF DESCRIPTION OF THE DRAWINGS

A more detailed description of the disclosure, briefly summarized above, may be had by reference to various embodiments, some of which are illustrated in the appended drawings. While the appended drawings illustrate select embodiments of this disclosure, these drawings are not to be considered limiting of its scope, for the disclosure may admit to other equally effective embodiments.

FIG. 1 is a block diagram illustrating a sustainability optimization system for predicting sustainability of a process, and optionally for optimizing the process using the sustainability predictions, in accordance with embodiments of the disclosure;

FIG. 2 is a schematic diagram of a cloud-based system used by an AI framework of the sustainability optimization system, in accordance with embodiments of the disclosure;

FIG. 3 is a flowchart showing an example method performed by the sustainability optimization system shown in FIG. 1, in accordance with embodiments of the disclosure; and

FIG. 4 is a block diagram of an exemplary computer system that could be used to implement components of the sustainability optimization system shown in FIG. 1.

Identical reference numerals have been used, where possible, to designate identical elements that are common to the figures. However, elements disclosed in one embodiment may be beneficially utilized on other embodiments without specific recitation.

DETAILED DESCRIPTION

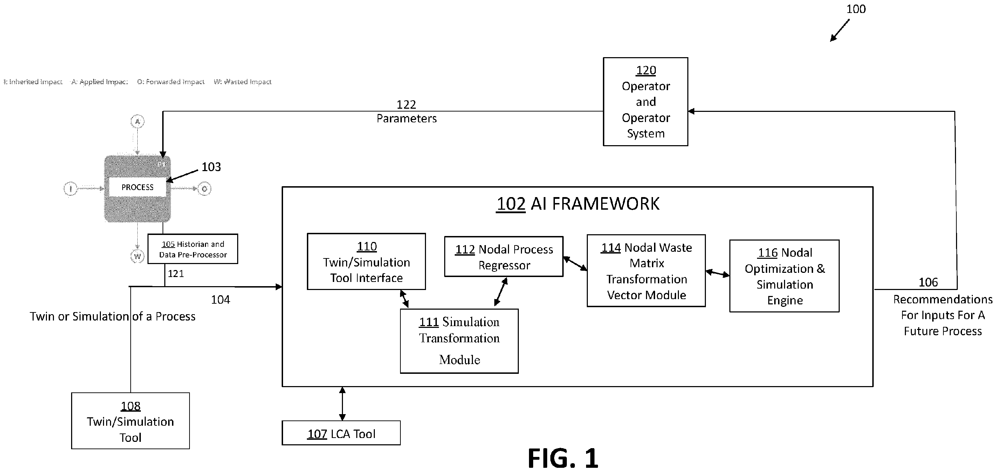

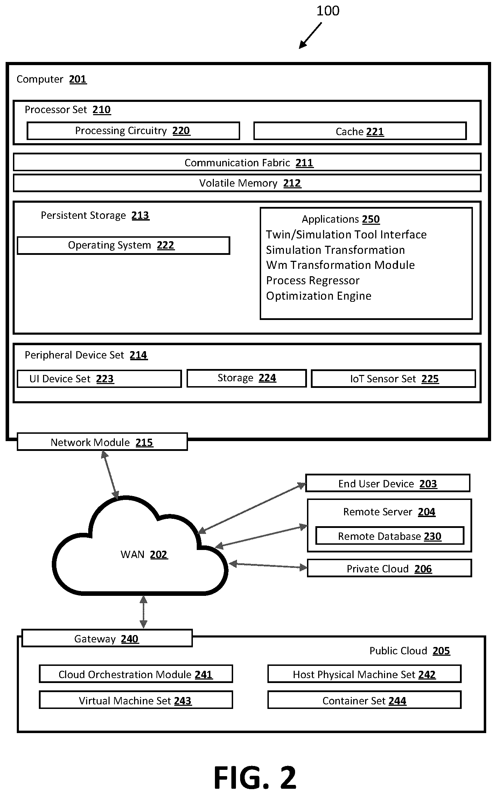

Reference will now be made to the drawings wherein like reference numerals identify similar structural features or aspects of the subject disclosure. For purposes of explanation and illustration, and not limitation, a block diagram of an exemplary embodiment of a sustainability optimization system in accordance with the disclosure is shown in FIG. 1 and is designated generally by reference character 100. Other embodiments of the sustainability optimization system 100 in accordance with the disclosure, or aspects thereof, are provided in FIGS. 2-4, as will be described.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth. It is to be appreciated the embodiments of this disclosure as discussed below are implemented using a software algorithm, program, or code that can reside on a computer useable medium for enabling execution on a machine having a computer processor. The machine can include memory storage configured to provide output from execution of the computer algorithm or program.

As used herein, the term "software" is meant to be synonymous with any logic, code, or program that can be executed by a processor of a host computer, regardless of whether the implementation is in hardware, firmware or as a software computer product available on a disc, a memory storage device, or for download from a remote machine. The embodiments described herein include such software to implement the equations, relationships, and algorithms described above. One skilled in the art will appreciate further features and advantages of the disclosure based on the above-described embodiments. Accordingly, the disclosure is not to be limited by what has been particularly shown and described, except as indicated by the appended claims.

With reference to FIG. 1, sustainability optimization system 100 includes an AI framework 102 that receives (at flow 104) a digital twin model or a simulation model (referred to as twin/simulation model) of a process 103 and operates on the twin/simulation model using artificial intelligence-based algorithms to construct and train an ML model. The term "process" can refer to an abstracted system, and with respect to process 103, the terms "process" and "system" can be used interchangeably.

The trained ML model can predict a relationship between applied inputs (for a set of inherent inputs) to the process and outputs of the process, including desired and unwanted outputs. The predicted relationships can also include a prediction of costs incurred. Optimal (and optionally sub-optimal) operating points (that define the applied inputs and predict the outputs) for the process are selected in view of sustainability (and potentially other) constraints. Recommendations for the optimal (and optionally sub-optimal) operating points are output at flow 106. The recommendations can be used for future configurations of the process, avoiding the risk of failure to operate the process while meeting sustainability constraints and process constraints and/or the risk of incurring avoidable costs while operating the process.

AI framework 102 includes a twin/simulation tool interface 110, a simulation transformation module 111, a nodal process regressor 112 (also referred to as process regressor 112), a nodal waste matrix transformation vector module 114 (also referred to as WM transformation module 114), and a nodal optimization and simulation engine 116 (also referred to as optimization engine 116). Simulated process 103 receives inherent inputs $I$, applied inputs $A$, forwarded impact $O$ (which is a desired output of the process), and unwanted output $A$, which is at least one type of waste).

Some examples of inherent inputs include environmental conditions, such as ambient temperature and ambient pressure, number of turbines, number of compressors, input power of compressor, flow rate of the working fluid, mass of the working fluid, pump size, pump head (capacity), etc. In another example, in the consumer packaged goods (CPG) industry (such as breweries, etc.), the inherent input can be temperature and the applied input for breweries can be amounts of water, yeast, other additives, etc. In some examples, the applied inputs include configurations that affect or control the process. The configuration can include, for example, settings and arrangement of software, hardware, and/or firmware components used for the process 103.

Some examples of a desired output can be, for example, a production rate for a manufacturing process, production quality, turbine energy yield for a power plant, enthalpy of the turbine, pressure ratio (increase) of the compressors, pressure ratio (increase) of the pump, working fluid temperature, revolutions per minute (RPM), (in the CPG industry) amount of alcohol produced, etc. As discussed further, desired output can be affected by constraints, such as constraints of machinery, demand, supply chain, or operational settings, etc.

AI framework 102 can receive model data at flow 104 including a twin/simulation model of a process at flow 104 from a client twin/simulation tool 108. The twin/simulation tool 108 refers to a tool that provides the twin/simulation model as a model of a "future to-be" process. A life cycle assessment (LCA) tool 107 is provided that performs life cycle assessments on the twin/simulation model to assess environmental impacts of the twin/simulation model at its various phases. Any of LCA tool 107, twin/simulation tool 108, and AI framework 102 can be combined into an integrated module or can be discrete modules. AI framework 102 can be modularized as a separate component for interacting with twin/simulation tool 108 and with LCA tool 107. AI framework 102 can interface with twin/simulation tool 108 to cause simulation of different inherent inputs and applied inputs to the twin/simulation model, which will result in AI framework 102 receiving different outputs from twin/simulation model 108. This allows users to work with the twin/simulation tool 108 and AI framework to optimize the "future to-be" process, including to optimally maximize a desired output of the process and minimize unwanted outputs while meeting sustainability goals and configurable constraints.

Al framework 102 can be agnostic to twin/simulation tool 108 and LCA tool 107. An example twin/simulation tool 108 is a modelling, simulation and sustainability tool provided by any hybrid or process LCA, for example ImpactSphere™. The twin/simulation tool 108 can be a proprietary tool or a tool to be developed in the future, without limitation to a specific twin/simulation tool 108. The process can include hardware, software, and/or firmware associated with a variety of different technologies, such as (without limitation) industrial controls, industrial processes, supply chain processes, and process manufacturing, such as (without limitation) industrial controls, industrial processes (e.g., brewing), supply chain, packaging processes, computer numerical control (CNC) processes, heat, ventilation, and combined heat and air conditioning (HVAC).

The desired output can be, for example, production rate, production quality, energy produced, revolutions per minute (RPM), or in the CPG industry, amount of alcohol produced. As discussed further, desired output can be affected by constraints, such as operating temperature, pressure, water level, raw material sourcing and minimum output required to be produced. The unwanted output can be environmental waste, such as carbon dioxide (COX), nitrogen oxide (NOX), or other pollutants. Another unwanted output other than waste could be, for example, cost (e.g., time, resources, money).

With additional reference to FIG. 2, a schematic diagram is provided showing possible architectures of sustainability optimization system 100. All or portions of Al framework 102, historian/and data pre-processor 105, twin/simulation tool 108, and operator system 124 can be deployed on local computing devices, such as computer 201, remote computing devices, such as remote server 204, a private cloud 206, or a public cloud 205. Private cloud 206 can include the components shown for public cloud 205, namely a gateway 240, a cloud orchestration module 241, a host physical machine set 242, a virtual machine set 243, and/or a container set 244. Deployment on private cloud 206 and public cloud 205 can be a physical deployment using host physical machine set 242, a virtual deployment using virtual machine set 243, or can use containers (e.g., supported by Docker®, Kubernetes, or the like), such as container set 244. Virtual machine set 243 can use a virtual operating system and can be hosted on host physical machine set 242. Additionally or alternatively, container set 244 can use host physical machine set 242.

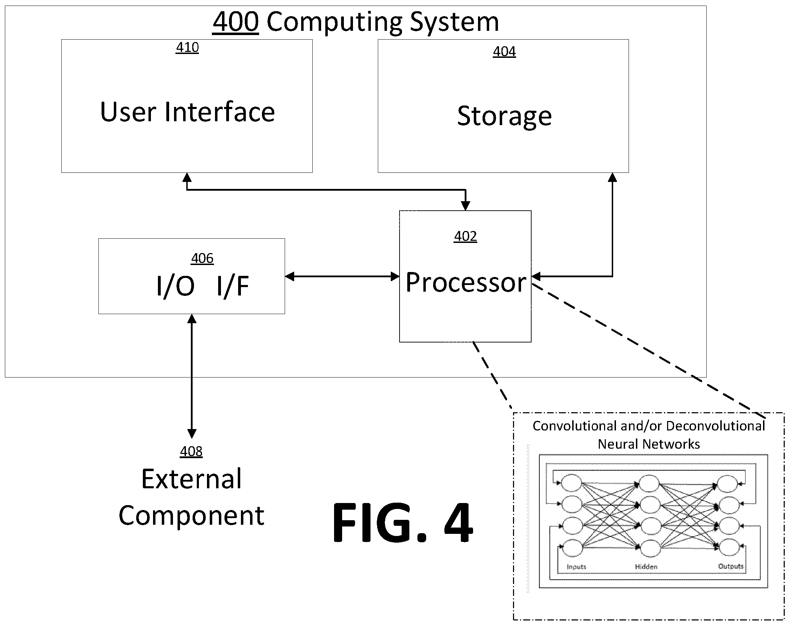

Each of the physical computing devices, e.g., computer 201, end user device 203, remote server 204, cloud orchestration module 241, host physical machines of host physic machine set 242, container set can be configured using a computer system 400 shown in FIG. 4. In the example shown in FIG. 2, computer 201 includes a processor set 210 having processing circuitry 220 and cache 221, communication fabric 211, volatile memory 212, persistent storage 213, peripheral device set 214, and a network module 215. Most of these modules correspond to modules shown and described and greater detail with respect to FIG. 4. Peripheral device set 214 includes a user interface (UI) device set, such as a keyboard, touchscreen, etc., additional storage 224, and an IoT sensor set 225 (such as a microphone, camera, gyroscope, etc.).

End user device 203 can be a smartphone, laptop computer, desktop computer, computer terminal, etc. End user device 203 can communicate with components of process 103, twin/simulation tool 108, Al framework 102, and operator systems 124, such as for providing user input, adjusting settings, receiving and analyzing data, providing insights based on the analysis, and causing updating of appropriate components. Remote server 204 is a server that can include a remote database 230. Each of the components of sustainability optimization system 100 shown in FIG. 2, namely computer 201, end user device 203, remote server 204, private cloud 206, and public cloud 205, can communicate via one or more private and public wide-area-networks (WANs) 202. This communication can facilitate provision twin/simulation data from twin/simulation tool 108, historical data about process 103 or similar processes from historian and data pre-processor 105, and actual data 216 related to process 103, e.g., from the premises of the process 103 (e.g., one or more factories or data centers with Al framework 102. Additionally, one or more ML models 202 trained by Al framework 102 via cloud-based computer 201 can be accessible via public cloud 205, private cloud 206, and/or WANs 202.

The individual components of Al framework 102 (twin/simulation tool interface 110, simulation transformation module 111, WM transformation module 114), process regressor 112, and optimization engine 116), historian and data pre-processor 105, LCA tool 1007, twin/simulation tool 108, operator system 124 can be implemented on one or more of the components of sustainability optimization system 100 shown in FIG. 2.

Applications 250 can be stored in persistent storage 213 of Al framework 102 and can be hosted locally or using container set 244 or virtual machine set 243. The applications 250 can include, for example, the software used for any of twin/simulation tool interface 110, simulation transformation module 111, WM transformation module 114), process regressor 112, and optimization engine 116.

With returned reference to FIG. 1, twin/simulation tool interface 110 includes hardware, software, and/or firmware for communicating with twin/simulation tool 108 and performing its functions. Twin simulation interface can access, for example, JSON and/or .xls files for communicating with twin/simulation tool 108.

Simulator transformation module 111 includes hardware, software, and/or firmware for performing its disclosed functions. Functions performed by simulator transformation module 111 include determining whether there is a need to transform features of the simulation data to new features to have a reduced number of dimensions, based on whether the number of dimensions exceeds a threshold number. The number of dimensions of the simulation data is determined by identifying inputs, applied inputs and outputs included in the simulation data and summing the number of identified inputs, applied inputs, and outputs. When the number of dimensions exceeds the threshold, the transformation is performed to reduce the number of dimensions by applying singular value decomposition (SVD).

Process regressor 112 includes hardware, software, and/or firmware for performing the disclosed functions. This component can be coded using Python™, R™, and/or Julia™ applications. Progress regressor 112 can apply double cross validation enhance machine learning. Progress regressor 112 can further use outer cross validation tests consistency of a machine learning (ML) model across different test sets. The outer cross validation is used to select a trained ML model from a plurality of candidate trained ML models based on the consistency. The inner validation tests hyper-parameters and/or features of the trained ML model for consistency and selects the hyper-parameters and/or features for the trained ML model that provide the best consistency. This allows process regressor 112 to select a best model by choosing a best hyper parameter in an inner layer and a most consistent model in an outer layer.

Accordingly, the outer cross validation is used to test consistency of a plurality of trained ML model across different test sets and select the trained ML model from the plurality of trained ML models based on the consistency, and the inner validation is used to test hyper-parameter and/or feature selection for the trained ML model and to select hyper-parameters and/or features for the trained ML model.

WM transformation module 114 includes hardware, software, and/or firmware for performing the disclosed functions. WM transformation module 114 maps a waste vector $R^P$ having P dimensions to a reduced waste vector R having fewer dimensions, and possibly one dimension.

Optimization engine 116 includes hardware, software, and/or firmware for performing the disclosed functions. Optimization engine 116 leverages deterministic optimization where optimal parameters of Input or applied input are selected for generating an optimal operating model in view of the constraints. Architecture of optimization engine 116 is based on constraints, such as constraints of machinery, demand, or operating settings.

Process 103 can include a historian and data pre-processor 105 (also referred to as pre-processor 105) that keeps a history of data collected from the inherent inputs I, applied inputs A, forwarded impact O (which are desired outputs of the process), and unwanted outputs W for process 103. The pre-processor of historian and data pre-processor 105 pre-processes the collected data to prepare it for provision to AI framework 102. Historian and data pre-processor 105 can be a centralized system or can be distributed. All or portions of historian and data pre-processor 105 can be local to the process 103 for collecting data. All or portions of historian and data pre-processor 105 can be remote from process 103 and communicate with process 103 via a public and/or private network. The pre-processing performed by historian and data pre-processor 105 can be local to process 103 or remote from process 103. Historian and data pre-processor 105 can be deployed for using a physical or virtual machines (such as host physical machine set 242 or virtual machine set 243 shown in FIG. 2) or containers (such as container set 244).

Communication between any of twin/simulation tool interface 110, simulation transformation module 111, WM transformation module 114, process regressor 112, and optimization engine 116 can use wired or wireless communication links and can use one or more networks. The networks can include one or more of a local area network (LAN), wide area network (WAN), both of which can be private or public networks. Each of twin/simulation interface 110, simulation transformation module 111, process regressor 112, WM transformation module 114, and optimization engine 116 can be disposed in the cloud or on premises and can be implemented as a physical or virtual module. For example, communication via flow 120 can use a digital backbone platform that connects operational technology (OT) of complex system 107 with informational technology (IT) used by AI framework 102. An example digital backbone platform is the ECOSTRUXURE® Platform by Schneider Industries SAS.

At a first stage, WM transformation module 114 receives (via a twin/simulation tool interface 110) the model data including a twin/simulation model of a process at flow 104 from twin/simulation tool 108. WM transformation module 114 maps the twin/simulation model to one or more data structures, such as one or more input data structures. The data structures can be vectors or matrices. One or more input data sets of the twin/simulation model can be mapped to, for example, an inherent input vector or matrix and an applied input vector or matrix. One or more output data sets of the twin/simulation model can be mapped to, for example, a desired output vector or matrix and one or more unwanted output vectors or matrices. The unwanted output vectors or matrices includes a waste vector or matrix. The terms vectors and matrices as used herein are examples of data structures and are not intended to limit the disclosure to a particular type of data structure.

The process, which is not limited to specific type of process, is treated as a generic process. The waste matrix has a first dimension. WM transformation module 114 applies a mathematically based waste vector reduction function for transforming the waste matrix into a waste vector having a second dimension that is lower than the first dimension. Transformation of the waste matrix into the waste vector can use, for example, a SVD operation. The mathematically based waste vector reduction function is described further below.

At a second stage, process regressor 112 applies machine learning (ML) regression techniques to the matrices or vectors to which the process was mapped, including the waste vector that was output by WM transformation module 114. A product of the ML regression techniques is used for further processing by optimization engine 116. The product of the ML regression techniques can be one or more ML models. The regression techniques can be used for constructing and/or training the one or more ML models. One example ML regression technique is a maximum likelihood estimation (MLE) process. It is noted that MLE estimation process can be used for both deep learning as well as statistical learning.

MLE is a general approach to estimating parameters in statistical models, such as the constructed one or more ML models, by maximizing the likelihood function, which is defined as $L(\theta|X)=f(X|\theta)$, wherein X is the probability of obtaining data X, given some value of parameter $\theta$.

Another technique used with ML regression is analytically derived mean square error (MSE) that can be used to linearize the machine learning process.

Process regressor 112 leverages the ML model(s) to understand relationships between applied inputs and outputs (including unwanted outputs, such as waste). In case of multiple waste items, each waste item can be applied to the ML models. The ML models can include, for example, parametric models, such as Lasso, elastic net, and or single-layer neural network (NN) The ML models are hyper-tuned, such as by using inner-cross validation. Hence, for each waste item, a best and most consistent model can be selected in the outer layer.

Process regressor 112 can further select the best ML model using inner-cross validation, such as for best hyper-tuned parameters. The most consistent model can be selected by leveraging voting in the outer cross validation layer. The selected ML model is then used to generate (e.g., create, derive, or modify) an objective function, such as, without limitation, a fitness function for each waste item. In case there are multiple waste items, normalization across waste vectors can be used to combine the waste. Weighted functions derived from a regressor function for each waste item can also be combined.

The number of the dimensions of the waste vector were reduced before optimizing the objective function. This reduction in dimensionality of the waste vector can reduce the computational load needed to minimize the objective function associated with unwanted output.

A sensitivity analysis tests how output of the objective function derived from ML model is affected when constraints in the optimization engine are changed. Some example methods of performing the sensitivity analysis (which can be selected based on the specific model used and available computational resources) include using Sobol indices and other sensitivity analysis tools to generate more data by changing the cost of constraints or weights of objective values.

Once optimization is complete, sensitivity analysis is used to find additional sub-optimal values resulting from different constraints that cause changes to the optimized value obtained from the objective function. The objective function is a summing of weights of the machine learning models used per waste.

Optimization and simulation engine 116 uses the selected ML model to perform an optimization operation, based on configurable constraints (e.g., quality and throughput, without limitation) for mapping to the process the applied inputs, settings, and process wastage. The applied inputs can determine configuration of the process. The settings can be customized as per client needs. In an example optimization operation for a computer numerical control (CNC) machine, a number of dies produced per day must exceed some minimum value. Optimal and sub optimal values determined using the constraints causes generation of values in settings in processes for the CNC machine. These settings can set an amount of applied input, such as revolutions per minute for operation of the CNC machine to minimize waste. The applied inputs are optimized for maximizing desired outputs of the process and meeting sustainability goals of the process. Meeting the sustainability goals can include minimizing an unwanted output of the process. The unwanted output can be the process wastage.

Key parts of optimization include objective function, decision variables, and constraints. The objective function is derived from machine learning models (see Z in Equation (12) (noting that the weights (w) in Equation (12) are derived using gradient descent as shown in Equation (9)). Considering a case in which there are three waste items, each waste item would have an associated machine learning model. And hence Z would comprise as sum of weighted sum of the three machine learning models. The decision variables represent the values that determine the solution. For example, a level of an applied input. Regarding constraints, some examples of constraints include a range of ambient temperature, a range of output RPM, and/or a minimum quantity of output that needs to be produced.

Optimization engine 116 identifies and outputs as a recommendation suboptimal and optimal operation points for running process 103. Each of the suboptimal and optimal operation points includes a set of applied inputs for a set of inherent inputs for which the selected model predicts a set of desired and unwanted outputs. The recommendation is output via flow 106 to be available for use in configuring the actual process as a stand-alone process or for integration into a larger system, e.g., as a subprocess of one or more subprocesses.

The recommendation includes changes to process controls for process 103. The recommendation can include human-readable suggestions delivered via a user interface (UI) for communicating with one or more operators and/or software instructions for communicating with operator systems 120 and/or process 103 for causing the changes to the process controls.

The human-readable suggestions can instruct the operator(s) to make the suggested process controls changes, explain how to make the suggested process controls changes (e.g., walk the operator(s) through steps for implementing the suggested process controls changes), and/or allow the operator(s) to approve or reject the suggested process controls changes (e.g., before the software instructions are delivered to process 103). In one example, the recommendations can be delivered to the operator(s), operator systems 120, and/or process 103 using an Ecostruxure® platform by Schneider Electric Industries SAS. This recommendation is used to reduce risk during decision making, at a design stage, of configuring the process to not meet the sustainability criteria to perform inefficiently for meeting sustainability criteria such that sustainability criteria are not met or are met inefficiently.

Meeting the sustainability criteria inefficiently could include incurring a higher cost in terms of various cost factors. The cost factors can include, for example, consumption of resources, such as fuel, time, material, processing power, electrical power, etc.

The optimal and sub-optimal operation points can be useful to a user, e.g., a customer of AI framework 102, by providing a selection of operation points that satisfy the configurable system constraints from which to select. Implementation of the optimal and sub-optimal operation points can require changing a state of operation of the process, which can incur cost. Thus, by providing a selection of optimal and sub-optimal operation points, the user can select which of the optimal and sub-optimal operation points to use by factoring in costs that would be incurred to change the state of operation.

The optimized process, meaning the optimized applied inputs and/or configuration of the process, are output at flow 106 as a recommendation (also referred to as an optimum recommendation). The recommendation can be applied in an action space. The action space refers to action taken by the one or more operators or operator systems 120. The operator or operator system(s) 120 can be, for example, user(s) of a CNC machine or a fermentation module and/or computing systems. The operator or operator system(s) 120 may accept or reject the optimum recommendation provided by AI framework 102. Ideally the selected ML model would provide explainability which will give context that can be used to provide information that can help the operator consume the intelligent recommendation appropriately.

The recommendation can provide a waste value associated with an abstracted process for a given set of inherent and applied inputs and desired output. In this way, the operators and/or operator systems 120 can adjust parameters at flow 122 to design and/or adjust the actual process with reduced risk of obtaining an inefficient output (e.g., due to the desired output being unnecessarily low or an unwanted output of cost being unnecessarily high) or harmful output (such as due to the unwanted output, e.g., waste, being unnecessarily high).

The following is a mathematically based explanation of the functions performed by AI framework 102 and its modules.

Mathematically-Based Waste Vector Reduction Function

An example method used by WM transformation module 114 is now described. Dimensional space of a waste vector of the simulation/twin model that was received by WM transformation module 114 is reduced when the waste vector includes more than a threshold number (e.g., ten, without limitation to a particular value) of waste items. The objective is to obtain a transformed waste vector in a lower dimensional space.

First data in the waste vector is normalized. Once the data is normalized, SVD is applied to generate a left singular vector and a right singular vector, such as in accordance with Equations (1) - (3):

$$M = X - E(X); \qquad (1)$$

$$M = U \, \Sigma \, V_T; \qquad (2)$$

$$V_T : rows \ of \ V_T \ right \ singular \ vector \qquad (3)$$

*where*

$V_T$ right singular vector of M. The columns of $V_T$ represent eigen vectors of $M^T$. M,
M represents the variance of simulated data coming from a twin/simulator tool,
X is simulated data,
E is expected value, which represents mean of X against each dimension,
$U$ is left singular vector representing *eigen Vector for M $M^T$.,* and
$\Sigma$ represents eigen values for each left or right singular vector.

Considering top d values in $\Sigma$, Transformed Multi Indicator is calculated as shown in Equation (4):

$$P = U_T . M \qquad\qquad (4)$$

where

d is eigen values of M,
$U^T$ is transpose of left singular vector, and
P is the transformed waste vector in m dimension.

The output P represents a matrix (having many vectors) after being reduced to a vector having reduced dimensions. P can represent the value of X in transformed or easily interpretable dimension. This can help in reducing dimensions of X if X has many features (typically more than ten).

In a case where the number of dimensions of X are less than ten, the single vector decomposition process can be skipped. Process regressor 112 determines whether a number of waste metrics included in matrices and/or vectors associated with the process outputs exceeds a threshold value. In response to determining that the number of waste metrics exceeds the threshold value, process regressor 112 reconstructs a waste vector having a lower dimension than the matrices and/or vectors associated with the process outputs that exceed the threshold value. The term "reconstruction" indicates that the reconstructed data structure (here the waste vector) is determined from an original data structure (here the matrices and/or vectors associated with the process outputs) so that the reconstructed data structure has a lower dimension than the original data structure. The ML regression techniques use the reconstructed waste vector instead of the matrices and/or vectors associated with the process outputs that exceed the threshold value.

Reconstructing the waste vector uses at least one method selected from the following methods: single vector decomposition after normalization.

Optimization engine 116 uses a Jacobian matrix for different waste functions associated with waste outputs of the set of outputs, identifies optimum weights for the Jacobian matrix, and predicts waste output by the process using the optimum weights identified for the Jacobian matrix. An example method used by process regressor 112 is now described.

Optimizing the set of inputs and set of outputs set of outputs includes using an ML-based stochastic gradient descent for identifying weights for each waste metric included in a waste vector associated with the set of outputs and applying a multi-objective waste function for determining the optimized set of inputs and the optimized set of outputs.

A multi-objective waste function is minimized using a deterministic optimization process. The deterministic optimization process finds optimum values of input and applied inputs given the constraints, e.g., range of output minimum value per input or applied input and other system constraints. Deterministic optimization finds the optimum value using a polyhedron generated from intersection of the objective function and different constraints. The solution is deterministic as it finds the optimum value at the edges of the polyhedron.

In case the number of dimensions of simulations are more than 10, the X data can be transformed to a lower dimension R using a stochastic prediction to generate a cost function in vector space R for deterministic optimization and sensitivity analysis. The dimension d of $X$ is the sum of inputs, applied inputs and output. For example, in a process where applied inputs are amounts of heat, electricity; inputs are amounts of water, iron fillings; and output is an amount of molten iron, the total number of dimension is five. Here X includes $X\_1$=water, $X\_2$=iron, $X\_3$ =heat, $X\_4$=electricity, and $X\_5$ = molten iron.

Here, an LCA of a process is used to identify optimal or sub-optimal operation points by selecting inputs for a set of applied inputs for achieving optimized desired and unwanted outputs, in accordance with a function f(x) shown in Equation (5). Please note Equation (5) is used when SVD is not applied. In a case in which the SVD is applied to the simulated data, then original features of the simulated data are transformed to new features having a reduced number of dimensions, as denoted by P.

$$y_{co2} = f(X) = W^T . X\_train; y_1 \in R^m; X_{Train\,i} \in R^n, R^n \longrightarrow R^m, \qquad / \qquad y_{co2} =$$
$$f(P) = W^T . P_{train}; y_1 \in R^m; P_i \in R^n \qquad\qquad (5)$$

(In a case when SVD is applied to simulated data)
where

$R^n$ is a real number representing dimension of input and applied input,
$R^m$ is a real number with m dimension represent dimension of waste
$n$ is a number of features in X or P,
m is a number of categories of waste from 1.0 unit process, and
i represents the sample index.

The mean square error of machine learning model is given by Equation (#)6.

$$L(W) = f_1(X) = \frac{1}{N} * (Y - W^T.X\_train)(Y - W^T.X\_train)^T \quad L(W) = f_1(X) = \frac{1}{N} *$$

$$(Y - W^T.P\_train)(Y - W^T.P\_train)^T (after\ SVD\ transformation) \tag{6}$$

where $X_{train}$, *repersenting training data in original dimension, and*
*N represent totla number of observations.*

A Jacobian matrix J, having partial derivatives, represents cost function for computing multi-functional gradients for lower dimensional wastes. The disclosed cost function is intended to minimize error of physics-based simulations in order to identify an optimal operation point. Accordingly, a gradient for a stochastic gradient process can be computed as J as shown in Equation (7):

$$J = \begin{bmatrix} \nabla_{w1}(f_1(X)) \\ \nabla_{w2}(f_2(X)) \\ \nabla_{wd}(f_m(X)) \end{bmatrix} \tag{7}$$

where

m is the number of functions needed, and *w* represents weights of cost function, and
$f_1$, $f_2$, $f_m$ *represent functions of X for each waste category.*

An example is shown in Equation (8).
Let

$$\vec{y} = [y_1, y_2, y_3, y_m]$$

where

$$\vec{y}\ is\ vector = \begin{bmatrix} y_1 \\ y_2 \\ y_m \end{bmatrix}$$

In an example, $y_1$-$y_m$ represent different wastes, e.g., $y_1$ represents carbon emission, $y_2$ represents methane, $y_3$ represents hydrogen, and $y_m$ represents other high substances.
Equation (8) below represents the total waste function, where $\overrightarrow{F(w)}$ *is a mean Square value or absolute magnitude,* and each of $\overrightarrow{f(X)}$, $f_2\overrightarrow{(X)}$, and $f_3(\overrightarrow{X})$ which represent individual waste functions like carbon dioxide, NOX, carbon monoxide respectively.

$$\overrightarrow{F(X)} = \begin{bmatrix} f\_1(\overrightarrow{X}) \\ f_2(\overrightarrow{X}) \\ f_m(\overrightarrow{X}) \end{bmatrix} \tag{8}$$

Equation (9) is thus derived as a solution for finding gradients of m different waste functions which can help identify the function of waste w for n number of inputs :

$$J = \begin{bmatrix} \nabla_w\big(f_1(X)\big) \\ \nabla_w\big(f_2(X)\big) \\ \nabla_w\big(f_m(X)\big) \end{bmatrix} = \begin{bmatrix} \dfrac{\partial\big(f_1(X)\big)}{\partial w_1} & \cdots & \dfrac{\partial\big(f_1(X)\big)}{\partial w_n} \\ \vdots & \ddots & \vdots \\ \dfrac{\partial\big(f_m(X)\big)}{\partial w_1} & \cdots & \dfrac{\partial\big(f_m(X)\big)}{\partial w_n} \end{bmatrix} \qquad (7b)$$

Now interpolating above for ML for one function $f_1$ we get as:

$$\nabla_w f(W) = X_{train}^T . X\_train\ W - X_{train}^T . Y \qquad (9)$$

where

$W$ is weight vector, $W \,\varepsilon\, R^D,$
Y is waste vector obtained from twin/simulation tool 108, and
*train* refers to training data.

Applying maximum likelihood, let $X \,\varepsilon R^{n*m}$ matrix ($R^{n*m}$ being a matrix of random variables) where *n* is a number of instances of unique simulated experiments and m is a number of sensor data obtained from twin/simulator tool 108, as shown in Equations (10)-(12):

$$p(y_i|\vec{x_i},\theta) = N(y|f(\vec{x_i}),\sigma^2)..eq(2) \qquad (10)$$

$$=>\vec{x} \in R^n, y \in R \ and \ y = f(x) + \varepsilon \ \text{for} \ \varepsilon = N(0,\sigma^2) \qquad (11)$$

$$p(y|X,\theta) = N(y|X,\theta,\sigma^2) \qquad (12)$$

where

$X$ is vector of Random Variables,
$(y_i|\vec{x_i}, \theta)$ represent probability of waste value given value of X,
$\theta$ represents weights,
N represents "Normal" Gaussian Function,
$\sigma^?$ represents variance in gaussian function,

Equation (12) represents that output waste y represents a multidimensional gaussian distribution.
$p(y_i|\vec{l})$ *is the likelihood of probability density function of y at* $x^T$, for i =number of observations,

$$\text{hence } y\_n = x_n{}^T\ W + \varepsilon \qquad (13)$$

Equation (10) is used to estimate the probability of getting waste (y) given a vector of independent experiments $x\_i$ and a weight w that can minimize the error between actual waste and predicted waste, wherein i represent the index which can take value 1 to *n*.
Now if $Y = \{y_1, y_2, y_3 ... y_n \}$ & $X = \vec{x_1}, \vec{x_2}, .... \vec{x_n}$, where n represents a last index,

$$p(Y|X,w) = p(y_1|\vec{x}) * p(y_2|\vec{x_2}) * p(y_n|\vec{x_n}) = \prod_{i=1}^{n} p\left(y_i\middle|\overrightarrow{p(x_i)}\right). \qquad (14)$$

Taking the Log of both sides:

$$-\log\ P(y|_1 X, w) \dots = -\log \prod_{n=1}^{N} P(y_n | x_n \theta) \dots taking \log both\ sides \qquad (15)$$

$$\Rightarrow -\log P(y|X, w) = -\sum_{n}^{N} \log P(y_n | x_n, \theta) \qquad (16)$$

$$\Rightarrow L(\theta) = -\log P(y|X, w) = -\log\left(\frac{1}{\sqrt{2\pi\sigma^2}} * e^{\left(\frac{\left(y - x^T\theta\right)^2}{2*\sigma^2}\right)}\right) \qquad (17)$$

$$\Rightarrow L(\theta) = -\frac{1}{2\sigma^2}(y_n - x_n^T w)^2 + \sum_{n=1}^{N} \log\left(1/\left(\sqrt{2*\pi\sigma^2}\right)\right)..\text{equation (4)} \qquad (18)$$

Now minimizing $L(\theta)$ using a Gradient Descent Algorithm as follows:

a) Consider a vector $\vec{w} = \begin{bmatrix} w_1 \\ w_k \end{bmatrix}$ represent parametric vector

b) Set $I = 0$ and put initial parameters for learning rate ($\eta$) and Epsilon

c) Calculate $\nabla L(\vec{W})$ ... . .which is gradient Vector

d) While $\nabla L(\theta) > $ Epsilon:

e) $$\overrightarrow{W_{N+1}} = \overrightarrow{W_N} - \eta \sum_{i-.1}^{N} \{\nabla L(\vec{W})^T)$$ where N refers to training measurements over X, Y

f)

$$I = I + 1$$

g) end While

h) Return $\vec{\theta}$,(which is an optimized value with k components).

An example method used by optimization engine 116 is now described, using linear programming on a multi-objective function based on a prediction function for each process, applying a bottom-up process.

Let $A$ be an $m * n$ matrix, where m is a number of constraints and $n$ is a number of variables.

Let $\vec{b}\ \varepsilon\ R^m$ represent constraints from demand data, $\vec{x}\ \varepsilon\ R^n$ becomes an optimizing variable (e.g., without limitation, spindle speed, quantity produced), which needs to be minimized while ensuring the constraints are being met. The demand data can be provided as input to optimization engine 116 by a user or another processing device. Considering a scenario in which there are three noncompeting objective functions, these objective functions can be considered as a vector and constraints for a unit process to generate a polytope.

A polytope area is formed and $x\ \varepsilon\ R^n | A.\ \vec{x} \le \vec{b}$, where $\vec{b}$ is one or more constraints.

Hence, the objective function can be a sum of multiple competing objective functions when regressed independently, or if considered as a vector, it can be considered as an individual function, as shown in Equation (19).

$$\vec{z} = f'\left(t_{\{p,w\}}\right) = f(X) \qquad (19)$$

$$\vec{z} = f_{\_1}(X) + f_2(X) + f_3(X),$$

where

$\vec{z}$ is a sum of all objective function representing multi objective function that needs to be minimized. For example, $\vec{z}$ can represent a sum of weights.

$f'(t_{\{p,w\}})$ is a function of waste emitted from product $j$,

$f(X)$ represents waste function for Carbondioxide, and

$f_1(X) + f_2(X) + f\_3(X)$ represent waste function of a first dimension of waste (represented by subscript 1), a second dimension of waste (represented by subscript 2, and a third dimension of waste (represented by subscript 3).

An example use case is described as follows. Let there be n computer numerical control CNC machines, m work items to be operated on, and $k$ type of operations. CNC refers to automated control of tools, such as drills, lathes, mills, grinders, routers and 3D printers, by means of a computer. CNC transforms a piece of material (e.g., metal, plastic, wood, ceramic, stone, or composite) into a specified shape by following coded programmed instructions. $SE(i,k,l)$ represents a sustainable parameter, such as -eg (meaning energy), that can be consumed for $i^{th}$ workpiece, $k^{th}$ tool/machine and $l^{th}$ operation. Total energy $\vec{E}$ or any sustainability parameter can be determined using Equation (20):

$$\vec{E} = \sum_{i=1}^{I} \sum_{l=1}^{J} \sum_{k=1}^{K} SE(i, k, l). \tag{20}$$

Where $i$ is a workpiece number (value 1 to $I$), $j$ represents a type of operation applied to a workpiece $i$ (value 1 to $J$), $k$ represents a machine number (value 1 to $K$), $SE(i, k, l)$ represents standby energy consumption of the $k$th machine for fashioning the $i$th workpiece using the $j$th operation. The above is true is for a CNC machine but can be extended to any industrial processes. In this example, since 90% of energy is consumed, Equation (20) can be re-written as Equation (21):

$$\overrightarrow{Machine\ Time * Power\ CNC} \sim \sum_{i=1}^{I} \sum_{l=1}^{J} \sum_{k=1}^{K} SE(i, k, l) + \eth, \tag{21}$$

where $\eth$ is _noise.

Since power of the CNC machine can be constant for a given product, the aim is to generate a Machine Time based function from a given X input matrix for the CNC machine.

$X$ is input matrix $\in R^{(d*n)}$ where $d$ features are listed below and $n$ experiments represent physics simulations attained from twin/simulation tool 108 for different waste output vectors for each Process Unit. A process unit is the abstracted system that can represent a machine or group of machine which is subjected to a recommendation provided by AI framework 102, wherein AI framework 102 is configured for use with an LCA Process tool, such as LCA tool 107, wherein the LCA process tool assesses environmental impacts by balancing an energy equation.

m features for CNC Machine can be, but are not limited to:
$x_1$-Feed Velocity
$x_2$-Spindle Speed
$x_3$-Cutting Speed
$x_4$- Product Type
$x_5$-Lubricant Time
$x_6$-Input Material
$x_7$-Coolant
$x_8$- Type of Operation
$x_9$- Type of Feature
$x_{10}$- Methane Emitted

A $\vec{Y}$ response variable can be a set of variables $y_i$ that an LCA input -output (I-O) process calculator uses to measure waste for a supply chain. This can include energy and other parameters, as shown in Equation (22):

$$\vec{Y} = \begin{bmatrix} y_{\{energy\}} \\ y_{hydrogen} \\ y_{methane} \\ \cdot \\ \cdot \end{bmatrix} \tag{22}$$

A 3d matrix can be generated for $X' \in R^{(p*n*m)}$ where X' represents a tensor by combining different 2 d matrices for different products.

For each $y_i$, a function $f_i$ can be generated such that $f_i: R^m \to R$, where the function $f$ maps $n$ domain to one domain. However, this can be extended to other domains, as sustainable parameters can be extended to multi-dimensional co-domains as shown in Equation (23):

$$y_i = f(\vec{x}), \qquad\qquad (23)$$

where X is a set of all observation /measurement vectors of different random experiments from physics based simulations, namely $= \{(\vec{x_1}, \vec{x_2} \dots \vec{x_n})\}$.

$$\vec{y} \text{ is vector} = \begin{bmatrix} y_1 \\ y_2 \\ y_3 \end{bmatrix}$$

Let $\vec{y} = [y_1, y_2, y_3,]$, where $\qquad\qquad$ , and where $y_1$ represents Carbon Emission, $y_2$ reperesents Methane, $y_3$ *represents hydrogen.*

The CNC machine operates in various states. This example focuses on an active machine state in which machining operations actually occur.

In accordance with an objective function that focuses on energy consumed, where, in this example, energy consumed is considered every cubic mm of material that is churned off from a product for a given machining time. The volume of material churned off is a function of m operating settings of the CNC machine per product, per work step of a plurality of work steps.

$c_{ij}$ is obtained by a function $f$ when predicting $f$ in a lower dimension domain, wherein$c_{ij}$ represent the weights derived from MLE estimation as per Equation (18).

In case the $X_{train}$ has a high dimension, -there is a chance of overfitting. Hence, in some case, $X_{train}$ would be projected to a lower dimension using SVD. In this way, $x_{i,j}$ would be in a lower dimension in certain cases using SVD.

$$Min\ Z: \sum_{i=1}^{k} \sum_{l=1}^{m} c_{ij} * x_{i,j} \mid A * \vec{p_i} = \vec{b}, \text{ where} \qquad\qquad (24)$$

i represents work item from process $I$,
Z represents an objective function,
$x_{ij}$ represents a decision variable of features including inputs and/or applied inputs or a transformed version of inputs and/or applied inputs,
A represents a set of rules,
$\vec{p_l}$ represents a set of constraints,
$\vec{b}$ represents a constraints value, and
k represents dimension of $X$ vector

A constraint matrix can be set from the following constraints:

a) $p_{min} < p < p_{max}$
b) $R < R_a$ (Roughness)
c) Items Produce > Min Order Tools Milled
d) Sustainability Goals

Since there are different objective functions, such as methane, hydrogen peroxide, etc., it is possible to use a weighted metric method to minimize a multi objective function, as shown in Equation (25).

Another way is to allow clients to set goals as denoted by Z, and apply the goals per waste as shown below in Equation (25):

$$Min\ Z(X) = \sum_{m=1}^{M} (w_m * (f_m(x) - z'*)^p)^{1/p} z' = f(y*) \qquad\qquad (25)$$

St:

$$g_i(x) < 0, h(x) = 0, x, w > 0, i, j, p \in Integer$$

where

X represents input
Z(x) represents a difference between weight based sum and goals,
$w_m$ represents weights of each objective function derived for pareto optimality,

$F_m(x)$ represents objective function of waste m,

$z^{**}$ represents goals of client which is function of waste goals($y^*$),

$p$ represents norm L1 or L2, where L1 represents a magnitude of a difference actual waste and target waste hypothesized by industrial unit, and L2 represents MSE.

m and M represent waste category and final category of waste,

$g_i(x)$ represents a set of constraints,

$h_i(x)$ represents a set of constraints,

$I$ represents a number of constraint functions, and

$J$ represents a number of constraint functions.

To summarize, simulated data $X_{train}$ is transformed to a lower dimension by leveraging SVD. Once SVD is applied to projected data in a lower dimension, the lower dimension data is used to estimate a waste vector. This waste vector provides a prediction of future waste values. This system is governed by MLE, which provides weights of the objective function for the respective waste variables, as explained in Equation (8). The MLE process is repeated for different waste variables of the waste vector to generate a function z. In a case in which a client has goals, the goals can be added as a function, so that a difference between an actual and an expected goal is minimized. The optimization function can use goal-based deterministic programming to determine optimum inputs, including inherent inputs and/or applied inputs.

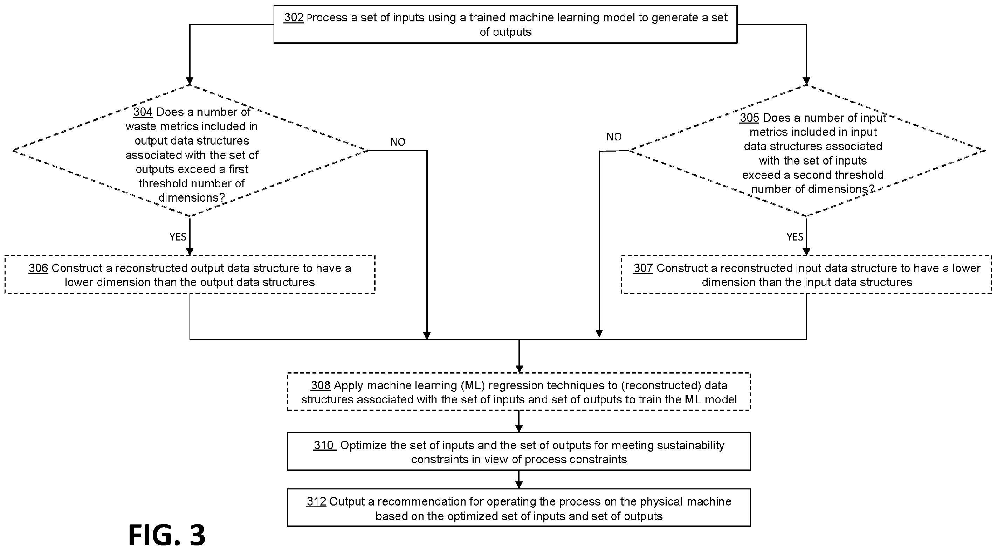

With reference now to FIGS. 3, shown is a flowchart demonstrating implementation of the various exemplary embodiments. It is noted that the order of operations shown in FIG. 3 is not required, so in principle, the various operations may be performed out of the illustrated order. Also certain operations may be skipped, different operations may be added or substituted, some operations may be performed in parallel instead of strictly sequentially, or selected operations or groups of operations may be performed in a separate application following the embodiments described herein.

FIG. 3 shows an example method performed by an AI framework in a sustainability optimization system, such as AI framework 102 of sustainability optimization system 100 shown in FIG. 1. At block 302, a set of inputs is processed using a trained machine learning model to generate a set of outputs. The set of inputs correspond to configuration parameters of a process (such as process 103 shown in FIG. 1) configured to be performed on a physical machine, and the set of outputs includes a plurality of predicted waste metrics resulting from performance of the process on the physical machine.

In one or more embodiments, the set of inputs are used by a twin or a simulation model of the process as performed on the physical machine to twin or simulate the configuration parameters of the process, and the set of outputs result from application of the twin or simulation of the process using the set of inputs.

Optional block 304 is performed in one or more embodiments. At block 304, a determination is made whether a number of waste metrics included in one or more output data structures associated with the set of outputs exceed a first threshold value.

Optional block 306 is performed in one or more embodiments responsive to determining at block 304 that the first threshold value is exceeded. At block 306, a reconstructed output data structure is constructed by reconstructing the one or more output data structure, so that the reconstructed output data structure has a lower dimension than the one or more output data structures. The ML regression techniques use the reconstructed output data structure instead of the original one or more data structures.

Optional block 305 is performed in one or more embodiments. At block 305, a determination is made whether a number of input metrics included in one or more input data structures associated with the set of inputs exceed a second threshold value.

Optional block 307 is performed in one or more embodiments responsive to determining at block 305 that the second threshold value is exceeded. At block 307, a reconstructed input data structure is constructed by reconstructing the one or more input data structures, so that the reconstructed input data structure has a lower dimension than the one or more input data structures. The ML regression techniques use the reconstructed input data structure instead of the one or more input data structures.

Optional block 308 is performed in one or more embodiments. At block 308, ML regression techniques are applied to matrices and/or vectors associated with the set of inputs and set of outputs to train the ML model, wherein optimizing the set of inputs and the set of outputs uses a product of the ML regression techniques.

In one or more embodiments, reconstructing the waste vector uses at least one method selected from the following methods: single vector decomposition after normalization.

In one or more embodiments, the method can further include performing an outer cross validation to test consistency of a plurality of trained ML model across different test sets and select the trained ML model from a plurality of trained ML models based on the consistency, and performing an inner validation to test consistency of hyper-parameter and/or feature selection for trained ML model and selecting hyper-parameters and/or features for the trained ML model based on the consistency.

At block 310, the set of inputs and the set of outputs are optimized for meeting sustainability constraints in view of process constraints.

In one or more embodiments, the set of outputs includes at least one desired process output and at least one unwanted output. The unwanted output includes a plurality of waste metrics resulting from performance of the twin or simulation of the process using the set of inputs, and the sustainability constraints are based on the plurality of waste metrics. Here, optimizing the set of inputs and the set of outputs includes optimizing both the at least one desired process output and the at least one unwanted output.

In one or more embodiments, optimizing the set of inputs and the setoff outputs includes using a Jacobian matrix for different waste functions associated with waste outputs of the set of outputs, identifying optimum weights for the Jacobian matrix, and predicting waste output by the process using the optimum weights identified for the Jacobian matrix.

In one or more embodiments, optimizing the set of inputs and the set of outputs includes using an ML-based stochastic gradient descent for identifying weights for each waste metric included in a waste vector associated with the set of outputs, and applying a multi-objective waste function for determining the optimized set of inputs and the optimized set of outputs.

In one or more embodiments, optimizing the set of inputs and the set of outputs includes using an ML-based stochastic gradient descent for identifying weights for each waste metric included in a waste vector associated with the set of outputs, and applying a multi-objective waste function for determining the optimized set of inputs and the optimized set of outputs.

In one or more embodiments, the optimization further minimizes a multi-objective waste function using a Deterministic Optimization process

In one or more embodiments, the optimization further minimizes costs associated with operation of the process.

At block 312, a recommendation is output for operating the process on the physical machine based on the optimized set of inputs and set of outputs, for avoiding a risk of failure to operate the process, while meeting the sustainability constraints and the process constraints.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions.

These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart(s) and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the flowchart and/or block diagram block or blocks.

With reference to FIG. 4, a block diagram of an example computing system 400 is shown, which provides an example configuration of computing components used in sustainability optimization system 100, including the physical computing devices, e.g., computer 201, end user device 203, remote server 204, cloud orchestration module 241, host physical machines of host physic machine set 242, and container set 244. Additionally, all or portions of the computing components could be configured as software, and computing system 400 could represent such portions. Computing system 400 is only one exmple of a suitable system and is not intended to suggest any limitation as to the scope of use or functionality of embodiments of the disclosure described herein. Computing system 400 can be implemented using hardware, software, and/or firmware. Regardless, computing system 400 is capable of being implemented and/or performing functionality as set forth in the disclosure.

Computing system 400 is shown in the form of a general-purpose computing device. Computing system 400 includes a processing device 402, memory 404, an input/output (I/O) interface (I/F) 406 that can communicate with an internal component, such as a user interface 410, and optionally an external component 408. Processing device 402 can further include or access neural networks, which can include convolutional and/or deconvolutional neural networks.

The processing device 402 can include, for example, a PLOD, microprocessor, DSP, a microcontroller, an FPGA, an ASCI, and/or other discrete or integrated logic circuitry having similar processing capabilities.

The processing device 402 and the memory 404 can be included in components provided in the FPGA, ASCI, microcontroller, or microprocessor, for example. Memory 404 can include, for example, volatile and non-volatile memory for storing data temporarily or long term, and for storing programmable instructions executable by the processing device 402. Memory 404 can be a removable (e.g., portable) memory for storage of program instructions. I/O I/F 406 can include an interface and/or conductors to couple to the one or more internal components 410 and/or external components 408.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flow diagram and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the block diagram block or blocks.

Embodiments of the computing components may be implemented or executed by one or more computer systems, such as a microprocessor. Each computer system 400 can be included within the computing components, or multiple instances thereof. In the example shown, computer system is embedded in the computing components. In various embodiments, computer system 400 may include one or more of a microprocessor, an FPGA, application specific integrated circuit (ASCI), microcontroller. The computer system 400 can be provided as an embedded device. Portions of the computer system 400 can be provided externally, such by way of a centralized computer, a data concentrator, a cockpit computing device controls display of gap status, e.g., notifications about the gap or alerts, or the like.

Computer system 400 is only one example of a suitable system and is not intended to suggest any limitation as to the scope of use or functionality of embodiments of the disclosure described herein. Regardless, computer system 400 is capable of being implemented and/or performing any of the functionality set forth hereinabove.

Computer system 400 may be described in the general context of computer system-executable instructions, such as program modules, being executed by a computer system. Generally, program modules may include routines, programs, objects, components, logic, data structures, and so on that perform particular tasks or implement particular abstract data types.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It is to be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein, but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1. A method, comprising:
   processing a set of inputs using a trained machine learning model to generate a set of outputs, wherein the set of inputs correspond to configuration parameters of a process configured to be performed on a physical machine, and wherein the set of outputs includes a plurality of predicted waste metrics resulting from performance of the process on the physical machine;

   optimizing the set of inputs and the set of outputs for meeting sustainability constraints in view of process constraints; and
   outputting a recommendation for operating the process on the physical machine based on the optimized set of inputs and set of outputs, for avoiding a risk of failure to operate the process, while meeting the sustainability constraints and the process constraints.

2. The method of claim 1, wherein the set of inputs are used by a twin or a simulation model of the process as performed on the physical machine to twin or simulate the configuration parameters of the process, and the set of outputs result application of the twin or the simulation model of the process using the set of inputs.

3. The method of claim 2, wherein the set of outputs includes at least one desired process output and at least one unwanted output, the unwanted output including the plurality of waste metrics resulting from performance of the twin or simulation of the process using the set of inputs, and the sustainability constraints are based on the plurality of waste metrics, and
   wherein the optimizing the set of inputs and the set of outputs includes optimizing both the at least one desired process output and the at least one unwanted output.

4. The method of claim 1, further comprising applying machine learning (ML) regression techniques to one or more input data structures associated with the set of inputs and one or more output data structures associated with the set of outputs to train the ML model, wherein the optimizing the set of inputs and the set of outputs uses a product of the ML regression techniques.

5. The method of claim 4, further comprising:

   determining whether a number of waste metrics included in the one or more output data structures exceeds a first threshold value; and
   in response to determining that the number of waste metrics exceeds the first threshold value, constructing a reconstructed output data structure to have a lower dimension than the one or more output data structures, wherein the ML regression techniques use the reconstructed output data structure instead of the one or more output data structures.

6. The method of claim 4, further comprising:

determining whether a number of input metrics included in the one or more input data structures exceeds a second threshold value; and
in response to determining that the number of input metrics exceeds the second threshold value, constructing a reconstructed input data structure to have a lower dimension than the one or more input data structures, wherein the ML regression techniques use the reconstructed input data structure instead of one or more input data structures,

wherein reconstructing the waste vector in particular uses at least one method selected from the following methods: single vector decomposition after normalization.

7. The method of claim 4, further comprising:

performing an outer cross validation to test consistency of a plurality of trained ML model across different test sets and select the trained ML model from a plurality of trained ML models based on the consistency; and
performing an inner validation to test consistency of hyper-parameter and/or feature selection for trained ML model and selecting hyper-parameters and/or features for the trained ML model based on the consistency.

8. The method of claim 1, wherein optimizing the set of inputs and the set of outputs includes:

using a Jacobian matrix for different waste functions associated with waste outputs of the set of outputs;
identifying optimum weights for the Jacobian matrix; and
predicting waste output by the process using the optimum weights identified for the Jacobian matrix.

9. The method of claim 1, wherein optimizing the set of inputs and the set of outputs includes:

using an ML-based stochastic gradient descent for identifying weights for each waste metric included in a waste vector associated with the set of outputs; and
applying a multi-objective waste function for determining the optimized set of inputs and the optimized set of outputs, and/or

wherein the optimization further minimizes a multi-objective waste function using a Deterministic Optimization process, and/or
wherein the optimization further minimizes costs associated with operation of the process.

10. A sustainability optimization system, the system comprising:

at least one memory configured to store a plurality of programmable instructions; and
at least one processing device in communication with the at least one memory, wherein the at least one processing device including and/or accessing at least one neural network, wherein upon execution of the plurality of programmable instructions is configured to:

process a set of inputs using a trained machine learning model to generate a set of outputs, wherein the set of inputs correspond to configuration parameters of a process configured to be performed on a physical machine, and wherein the set of outputs includes a plurality of predicted waste metrics resulting from performance of the process on the physical machine;
optimize the set of inputs and the set of outputs for meeting sustainability constraints in view of process constraints; and
output a recommendation for operating the process on the physical machine based on the optimized set of inputs and set of outputs, for avoiding a risk of failure to operate the process, while meeting the sustainability constraints and the process constraints.

11. The system of claim 10, wherein the at least one processing device, upon execution of the plurality of programmable instructions, is further configured to apply machine learning (ML) regression techniques to matrices and/or vectors associated with the set of inputs and set of outputs to train the ML model, wherein the optimizing the set of inputs and the set of outputs uses a product of the ML regression techniques.

12. The system of claim 11, wherein the at least one processing device, upon execution of the plurality of programmable instructions is further configured to:

determining whether a number of waste metrics included in the matrices and/or vectors associated with the set of outputs exceeds a threshold value; and
in response to determining that the number of waste metrics exceeds the threshold value, reconstructing a waste vector to have a lower dimension than the matrices and/or vectors associated with the set of outputs that exceed the threshold value, wherein the ML regression techniques use the reconstructed waste vector instead of the matrices and/or vectors associated with the set of outputs that exceed the threshold value.

13. The system of claim 11, wherein the at least one processing device, upon execution of the plurality of programmable instructions is further configured to:

perform an outer cross validation to test consistency of a plurality of trained ML model across different test sets and select the trained ML model from a plurality of trained ML models based on the consistency; and
perform an inner validation to test consistency of hyper-parameter and/or feature selection for trained ML model and selecting hyper-parameters and/or features for the trained ML model based on the consistency.

14. The system of claim 10, wherein optimizing the set of inputs and the set of outputs includes:

using a Jacobian matrix for different waste functions associated with waste outputs of the set of outputs;
identifying optimum weights for the Jacobian matrix; and
predicting waste output by the process using the optimum weights identified for the Jacobian matrix.

15. The system of claim 10, wherein optimizing the set of inputs and the set of outputs includes:

using an ML-based stochastic gradient descent for identifying weights for each waste metric included in a waste vector associated with the set of outputs; and
applying a multi-objective waste function for determining the optimized set of inputs and the optimized set of outputs.

FIG. 1

100

**Computer 201**

**Processor Set 210**

| Processing Circuitry 220 | Cache 221 |

Communication Fabric 211

Volatile Memory 212

**Persistent Storage 213**

Operating System 222

**Applications 250**
Twin/Simulation Tool Interface
Simulation Transformation
Wm Transformation Module
Process Regressor
Optimization Engine

**Peripheral Device Set 214**

| UI Device Set 223 | Storage 224 | IoT Sensor Set 225 |

Network Module 215

End User Device 203

Remote Server 204

Remote Database 230

WAN 202

Private Cloud 206

Gateway 240

**Public Cloud 205**

| Cloud Orchestration Module 241 | Host Physical Machine Set 242 |
| Virtual Machine Set 243 | Container Set 244 |

# FIG. 2

302 Process a set of inputs using a trained machine learning model to generate a set of outputs

304 Does a number of waste metrics included in output data structures associated with the set of outputs exceed a first threshold number of dimensions?

NO

305 Does a number of input metrics included in input data structures associated with the set of inputs exceed a second threshold number of dimensions?

NO

YES

306 Construct a reconstructed output data structure to have a lower dimension than the output data structures

YES

307 Construct a reconstructed input data structure to have a lower dimension than the input data structures

308 Apply machine learning (ML) regression techniques to (reconstructed) data structures associated with the set of inputs and set of outputs to train the ML model

310 Optimize the set of inputs and the set of outputs for meeting sustainability constraints in view of process constraints

312 Output a recommendation for operating the process on the physical machine based on the optimized set of inputs and set of outputs

FIG. 3

400 Computing System

410 User Interface

404 Storage

402 Processor

406 I/O I/F

408 External Component

Convolutional and/or Deconvolutional Neural Networks

Inputs  Hidden  Outputs

FIG. 4

| | Europäisches Patentamt European Patent Office Office européen des brevets | **EUROPEAN SEARCH REPORT** | **Application Number** EP 25 16 0441 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VÁZQUEZ DANIEL ET AL: "Process design within planetary boundaries: Application to CO2 based methanol production", CHEMICAL ENGINEERING SCIENCE, OXFORD, GB, [Online] vol. 246, 21 June 2021 (2021-06-21), XP086793651, ISSN: 0009-2509, DOI: 10.1016/J.CES.2021.116891 [retrieved on 2021-06-21] * abstract * * sections 1-5; page 2 - page 11; figures 1, 3, 6, 7; tables 1, 4 * ----- | 1-15 | INV. G06F30/27 G06N3/08 G06N20/00 G06Q10/04 |
| X | CN 117 634 707 A (HARBIN INST TECHNOLOGY) 1 March 2024 (2024-03-01) * paragraph [0065] - paragraph [0093] * ----- -/-- | 1-15 | |
| | | | TECHNICAL FIELDS SEARCHED (IPC) G06F G06N G06Q |

The present search report has been drawn up for all claims

| Place of search | Date of completion of the search | Examiner |
|---|---|---|
| Munich | 3 June 2025 | Lindner, Anja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 25 16 0441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WOLDAY ATAKLTI KAHSAY ET AL: "Surrogate model-based optimization of methanol synthesis process for multiple objectives: A pathway towards achieving sustainable development goals", CHEMICAL ENGINEERING RESEARCH AND DESIGN, [Online] vol. 204, 15 February 2024 (2024-02-15), pages 172-182, XP093283171, AMSTERDAM, NL ISSN: 0263-8762, DOI: 10.1016/j.cherd.2024.02.021 Retrieved from the Internet: URL:https://pdf.sciencedirectassets.com/276837/1-s2.0-S0263876224X00039/1-s2.0-S0263876224001035/main.pdf?hash=a56c7b3c9cba7ec60035aca9a4579b8ef524f6256c69f992664183047aba149f&host=68042c943591013ac2b2430a89b270f6af2c76d8dfd086a07176afe7c76c2c61&pii=S0263876224001035&tid=spdf-d6893e4b-74b2-4421-a059-774> [retrieved on 2025-06-03] * abstract * * sections 2-5; page 173 - page 179; figures 3, 5 * | 1-15 | |

----- 

-/--

**TECHNICAL FIELDS SEARCHED (IPC)**

The present search report has been drawn up for all claims

| Place of search | Date of completion of the search | Examiner |
|---|---|---|
| Munich | 3 June 2025 | Lindner, Anja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

page 2 of 3

Europäisches
Patentamt

European
Patent Office

Office européen
des brevets

**EUROPEAN SEARCH REPORT**

**Application Number**

EP 25 16 0441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GHOROGHI ALI ET AL: "Advances in application of machine learning to life cycle assessment: a literature review", THE INTERNATIONAL JOURNAL OF LIFE CYCLE ASSESSMENT, SPRINGER, DE, vol. 27, no. 3, 1 March 2022 (2022-03-01), pages 433-456, XP037805342, ISSN: 0948-3349, DOI: 10.1007/S11367-022-02030-3 [retrieved on 2022-03-28] * abstract * * sections 4-5.1; page 444 - page 449 * | 1-15 | |
| A | KEREMER OZGE ET AL: "Optimisation of a Chemical Process by Using Machine Learning Algorithms with Surrogate Modeling", 3 August 2023 (2023-08-03), MOBILE WEB AND INTELLIGENT INFORMATION SYSTEMS; [LECTURE NOTES IN COMPUTER SCIENCE; LECT.NOTES COMPUTER], SPRINGER NATURE SWITZERLAND, CHAM, PAGE(S) 187 - 201, XP047666409, ISSN: 0302-9743 ISBN: 978-3-031-39763-9 [retrieved on 2023-08-03] * abstract * * sections 5.1-7.8; page 192 - page 199 * | 1-15 | **TECHNICAL FIELDS SEARCHED (IPC)** |

The present search report has been drawn up for all claims

| Place of search | Date of completion of the search | Examiner |
|---|---|---|
| Munich | 3 June 2025 | Lindner, Anja |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 16 0441

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | Publication date |
|---|---|---|---|
| CN 117634707 A | 01-03-2024 | NONE | |

For more details about this annex : see Official Journal of the European Patent Office, No. 12/82